# EUROPEAN PATENT SPECIFICATION

(11) **EP 2 048 250 B1**
(45) Date of publication and mention of the grant of the patent: **17.09.2014**
(21) Application number: 07791422.4
(22) Date of filing: 27.07.2007
(51) Int. Cl.: C21D 9/56, C21D 1/74, C21D 1/76, F16J 15/16, F27B 9/28

(54) **SEALING APPARATUS AND STRIP PLATE CONTINUOUSLY ANNEALING EQUIPMENT**
DICHTUNGSVORRICHTUNG UND DAUERGLÜHGERÄT FÜR BANDPLATTE
APPAREIL DE SCELLAGE ET ÉQUIPEMENT DE RECUIT CONTINU À PLAQUE DE DÉVÊTISSAGE

(30) Priority: 03.08.2006 JP 2006211688
(43) Date of publication of application: 15.04.2009
(73) Proprietor: Mitsubishi-Hitachi Metals Machinery, Inc., Tokyo 108-0014 (JP)
(72) Inventor: NAGAI, Takanori, Hiroshima-shi Hiroshima 733-8553 (JP); YOSHIKAWA, Masashi, Hiroshima-shi Hiroshima 733-8553 (JP)
(74) Representative: Strehl Schübel-Hopf & Partner
(86) International application number: PCT/JP2007/064728
(87) International publication number: WO 2008/015964

(56) References cited:
- JP-A- 4 285 116
- JP-A- 05 125 451
- JP-A- 2003 129 125
- JP-A- 2005 060 738
- JP-A- 2005 060 738

## Description

### Technical Field

The present invention relates to a sealing apparatus and a continuous annealing furnaces which prevent an internal gas from leaking out of, or an external gas from entering into a heat treatment chamber in which continuous heat treatments of strips are performed.

### Background Art

In general, a strip manufacturing line for manufacturing strips is provided with continuous annealing furnace for continuously annealing strips having been rolled or the like. The continuous annealing furnace is provided with a furnace for annealing strips, and heat treatment chambers such as a heating zone, a cooling zone, and the like are formed inside the furnace sequentially from an upstream side in a conveyance direction of the strip. In order to prevent a highly-heated strip from oxidizing, the inside of the heating zone and the inside of the cooling zone (the inside of the furnace) are retained in a reducing atmosphere by use of an atmospheric gas obtained by mixing predetermined amounts of hydrogen gas and nitrogen gas. Therefore, the process in which the strip is caused to pass through the heating zone, the cooling zone, and the like in the furnace, and the process in which the temperature and time are controlled for heating and cooling allow the strip to have various mechanical, chemical, and other characteristics corresponding to the intended use

However, the pressure inside the furnace is set higher than the atmospheric pressure. Accordingly, the atmospheric gas inside the furnace is likely to leak out of the furnace on an entry-side or a delivery-side of the strip. Moreover, since the strip conveyed into the furnace is moving at a high speed, external gas following the strip is likely to enter the furnace on the entry-side along with the strip, while the atmospheric gas following the strip is likely to leak out of the furnace on the delivery-side along with the strip.

To address this problem, the conventional continuous annealing furnace is provided with sealing apparatuses on the entry-side and the delivery-side of the furnace in order to prevent the atmospheric gas from leaking out of the furnace and the external gas from entering into the furnace. Several types of such sealing apparatuses are provided including, for example, one that sucks an atmospheric gas inside a furnace and an external gas using suction devices provided respectively on an entry-side and a delivery-side of the furnace, thus preventing leakage and entry of these gases (Patent Document 1), one that includes multiple stages of sealing rolls provided on an entry-side and a delivery-side of a furnace, and that sucks an atmospheric gas leaked out to chambers formed by the sealing rolls and then circulates the sucked gas into the furnace (Patent Document 2), and so force.

Patent Document 1: Japanese Unexamined Patent Application Publication No. Sho 51-135809
Patent Document 2: Japanese Unexamined Patent Application Publication No. Hei 4-285116

### Disclosure of the Invention

### Problems to be solved by the Invention

However, in the conventional sealing apparatuses, a gap between the strip and each of openings on the entry-side and the delivery side of the furnace, and a gap between the strip and the sealing roll have to be set so that the strip is not in contact with the openings or the sealing roll. Accordingly, the size of such gap can be reduced only to a limited extent. Therefore, in order to improve sealing performances, a suction amount has to be increased. Then an amount of the gas used for sealing is increased. Accordingly, there has been a risk of causing an increase in utility costs.

Specifically, in the sealing apparatus of Patent Document 1, the atmospheric gas inside the furnace and the external gas are sucked with the suction devices provided at boundaries between the furnace and the outside, and then exhausted. In this configuration, the inside of the furnace needs to be replenished with a new atmospheric gas by the same amount as those of the atmospheric gas sucked and exhausted together with the external gas, thereby causing an increase in the amount of the gas to be used.

Meanwhile, in the sealing apparatus of Patent Document 2, a suction amount has to be increased because of the risks of the leakage and entry of the gas through the gap between the strip and the sealing roll and the gaps between each of the sealing rolls and each of the openings on the entry-side and the delivery-side of the furnace. As a consequence, the amount of the gas to be used is increased. Moreover, since inner pressure of an upstream side chamber is maintained at a high level, the nitrogen gas leaks out through a gap between the sealing roll on the upstream side and the strip. The nitrogen gas therefore always needs to be supplied into the upstream side chamber, thereby further increasing the amount of the nitrogen gas to be used. At the same time, the nitrogen gas also enters a downstream side chamber. Accordingly, the nitrogen gas thus entering is contained in the atmospheric gas to be circulated from the downstream side chamber into the furnace. Because of this, the nitrogen density of the atmospheric gas inside the furnace increases. Therefore, in order to maintain components of the atmospheric gas to constant levels, the entire components of a large amount of the circulated atmospheric gas need to be adjusted, and this adjustment leads to degradation in efficiency at the gas circulation.

Meanwhile, there is a growing demand for super-high tensile strength strip in the field of strips in recent years. In the continuous annealing furnace for annealing such a high grade type, quenching in which hydrogen gas having high heat conductivity and high density is injected needs to be performed. Accordingly, growing is a demand for an improved sealing performance between a heating zone and a cooling zone (a quenching zone). Specifically, the components of the atmospheric gases to be filled in the heating zone and the cooling zone are different, and the quality of the strip will be maintained by controlling each of the gas components at high precision. Therefore, the improvement in the sealing performance between the heating zone and the cooling zone will results in the quality improvement of the strip. However, the sealing apparatuses according to Patent Documents 1 and 2 merely cope with the entry-side and the delivery-side of the furnace and are not applicable to the sealing between the heat treatment chambers such as the heating zone and the cooling zone.

Accordingly, the present invention is provided to solve the above-mentioned problems and provides a sealing apparatus and continuous annealing furnace which are capable of enhancing a sealing performance and also attaining cost reduction by suppressing an amount of usage of a sealing fluid.

JP-2005-060738 discloses a sealing apparatus with the features in the preamble of present claim 1.

### Means for solving the problem

To solve the problems, the present invention provides a sealing apparatus as defined in present claim 1. The dependent claims relate to preferred embodiments.

### Effect of the Invention

According to the sealing apparatus defined in claims 1 or 2, it is possible to improve a sealing performance and to attain utility cost reduction by controlling an amount of usage of the atmospheric fluids.

According to the sealing apparatus defined in claim 3 there are provided a plurality of stages of the sucking means in a conveyance direction of the strip, and each of the plurality of stages of the sucking means is provided with the circulating means. Hence it is possible to improve the sealing performance and to attain utility cost reduction by controlling the amount of usage of the atmospheric fluids.

According to the sealing apparatus defined in claim 4, there is provided flow rate adjusting means for performing adjustment so that an amount sucked by the sucking means becomes equal to an amount returned by the circulating means. Accordingly, the pressures inside and outside the heat treatment chamber can be kept at a constant level. Hence the suction amount becomes constant and it is possible to perform component adjustment of the mixed fluid easily.

According to the sealing apparatus defined in claim 5, there is provided suction power varying means for making suction power of the sucking means variable. Hence the suction power of the sucking means can be set so as to allow the sucking means to efficiently suck the leaking fluid and the entering fluid. Accordingly, the sucking at a small suction amount is made possible without causing turbulence or dispersion of the leaking fluid and the entering fluid.

According to the sealing apparatus defined in claim 6, the sucking means is supported so as to be movable in response to a strip thickness and a strip shape, and a nozzle is formed on a tip end of the sucking means so as to face the strip. Hence it is possible to control a volume of the mixed fluid in the vicinity of the nozzle to a minimum and thereby efficient sucking at a small suction amount is made possible. In this way, it is possible to downsize the sucking means and to form the compact apparatus as a whole.

### Brief Description of the Drawings

[Fig. 1] Fig. 1 is a schematic diagram of a sealing apparatus according to a first embodiment of the present invention.
[Fig. 2] Fig. 2 is a cross-sectional view taken along an A-A line in Fig. 1.
[Fig. 3] Fig. 3 is a schematic diagram of continuous annealing furnace according to the present invention.
[Fig. 4] Fig. 4 is a schematic diagram of a sealing apparatus according to a second embodiment of the present invention.
[Fig. 5] Fig. 5 is a schematic diagram of a sealing apparatus according to a third embodiment of the present invention.
[Fig. 6] Fig. 6 is a schematic diagram of a sealing apparatus according to a fourth embodiment of the present invention.
[Fig. 7] Fig. 7 is a schematic diagram of a sealing apparatus according to a fifth embodiment of the present invention.
[Fig. 8] Fig. 8 is a schematic diagram of a sealing apparatus according to a sixth embodiment of the present invention.

### Explanation of Reference Numerals

- 1: CONTINUOUS ANNEALING FURNACE
- 2: HEATING ZONE
- 3: QUENCHING ZONE
- 4: FINAL COOLING ZONE
- 5, 6: CONVEYING PATH
- 7: DEFLECTOR ROLL
- 8, 15 TO 19: ENTRY-SIDE SEALING APPARATUS
- 9: DELIVERY-SIDE SEALING APPARATUS
- 10, 14: GAS SUPPLY PIPE
- 12: GAS COOLER
- 13: GAS JET CHAMBER
- 21, 51: PARTITION
- 22, 52: GATE
- 23: BAFFLE PLATE
- 24a, 24b, 54a, 54b: CHAMBER
- 25a, 25b, 55a, 55b: SLIT
- 31, 61: INTAKE PIPE
- 11, 32, 62: FAN
- 33, 63: EXHAUST PIPE
- 34, 38, 41, 64, 68, 71: REGULATING VALVE
- 35, 40, 65, 70: FLOW METER
- 36: FLARE STACK
- 37, 67: RETURN PIPE
- 39, 69: SUPPLY PIPE
- 42: N₂ DENSITY SENSOR
- 72: H₂ DENSITY SENSOR
- 81, 82: SEALING PLATE
- 83, 84: SEALING ROLL
- 85 TO 87: GUIDE ROLL

### Best Modes for Carrying Out the Invention

Now, sealing apparatuses according to the present invention will be described below in detail by using drawings. Here, constituents having similar structures and functions in each of the embodiments will be denoted by identical reference numerals and explanations thereof will be omitted in the embodiments thereafter. Moreover, in each of the embodiments, only a configuration of an entry-side sealing apparatus will be described in detail whereas a delivery-side sealing apparatus has a configuration and functions similar to those of the entry-side sealing apparatus so the explanations thereof will be omitted.

### First embodiment

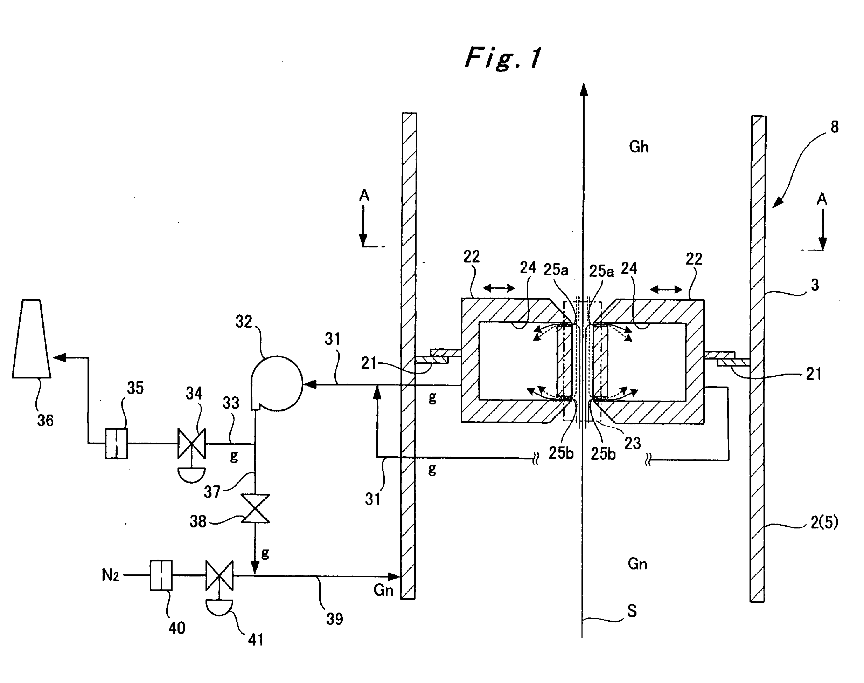

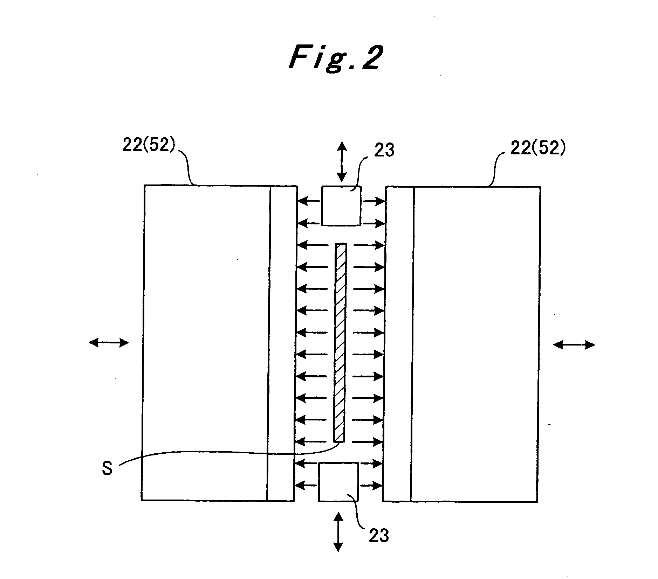

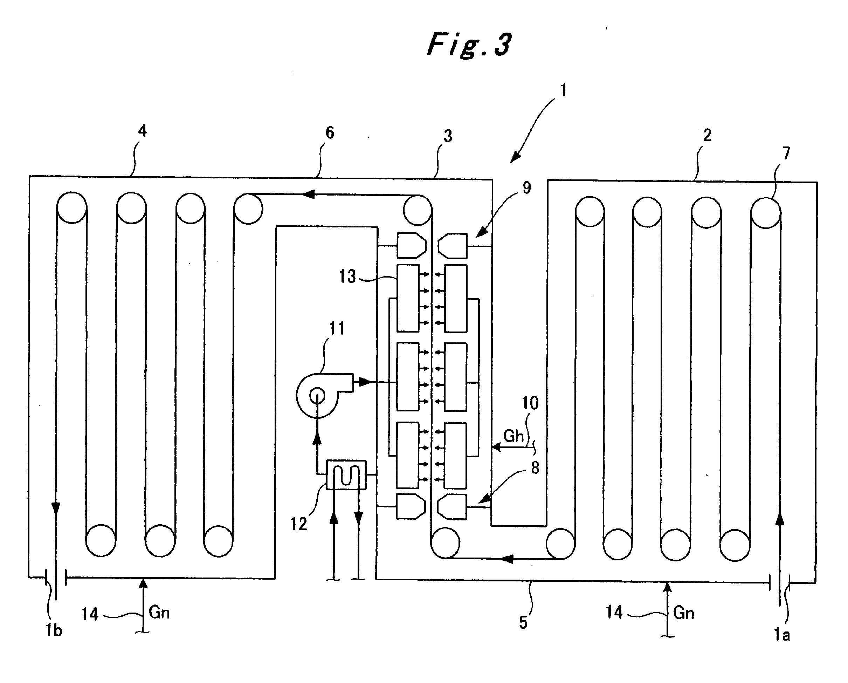

Fig. 1 is a schematic diagram of a sealing apparatus according to a first embodiment of the present invention, Fig. 2 is a cross-sectional view taken along an A-A line in Fig. 1, and Fig. 3 is a schematic diagram of continuous annealing furnace according to the present invention.

As shown in Fig. 3, a continuous annealing furnace 1 has an entrance port 1a to which a strip S is carried in and a discharge port 1b from which a strip S is carried out, and is provided with, sequentially from an upstream side in a conveyance direction thereof, a heating zone 2 being a heat treatment chamber, a quenching zone 3, and a final cooling zone 4. The heating zone 2 is connected to the quenching zone 3 through a conveying path 5, and the quenching zone 3 is connected to the final cooling zone 4 through a conveying path 6. Multiple deflector rolls 7 for guiding the strip S are rotatably supported inside the respective zones 2, 3, and 4 as well as the conveying paths 5 and 6. Moreover, an entry-side sealing apparatus 8 for sealing between the heating zone 2 side and the quenching zone 3 side is provided on an upstream side in a conveyance direction inside the quenching zone 3. Meanwhile, a delivery-side sealing apparatus 9 for sealing between the quenching zone 3 side and the final cooling zone 4 side is provided on a downstream side in a conveyance direction thereof. Here, the sealing apparatuses 8 and 9 have similar configurations and functions.

A gas supply pipe 10 and a fan 11 are connected to the quenching zone 3. The gas supply pipe 10 supplies an atmospheric gas Gh into the quenching zone 3, the atmospheric gas GH containing hydrogen gas (H₂) and nitrogen gas (N₂) designed to be mixed up in a predetermined proportion (such as approximately 70% of hydrogen gas and 30% of nitrogen gas). In this way, the quenching zone 3 is retained at a high-density hydrogen gas atmosphere. Meanwhile, the fan 11 sucks the atmospheric gas Gh inside the quenching zone 3 through a gas cooler 12 and sends the gas to multiple, right-left pairs of gas jet chamber 13 (three pairs in the drawing). The gas cooler 12 causes the atmospheric gas, that is heated up by absorbing sensible heat and the like of the strip S, to exchange its heat with cooling water or the like, so that the atmospheric gas Gh is cooled down. The gas jet chambers 13 are disposed to face each other while sandwiching the strip S, and jet the atmospheric gas Gh sent from the fan 11 onto the conveyed strip S. In this way, the strip S is subjected to jet of the atmospheric gas Gh that mainly contains high thermal conductive hydrogen gas, so that the strip S is quenched.

Meanwhile, gas supply pipes 14 are respectively connected to the heating zone 2 and the final cooling zone 4. The gas supply pipes 14 are used to supply an atmospheric gas Gn into the heating zone 2 and the final cooling zone 4, the atmospheric gas containing hydrogen gas and nitrogen gas designed to be mixed in a predetermined proportion (such as approximately 5% of hydrogen gas and 95% of nitrogen gas). In this way, the heating zone 2 and the final cooling zone 4 are retained at a low-density hydrogen gas atmosphere. In other words, the zones 2, 3, and 4 are respectively retained at the antioxidant atmosphere by the atmospheric gases Gh and Gn consisted of the hydrogen gas and the nitrogen gas. Accordingly, the conveyed strip S to the continuous annealing furnace 1 is prevented from oxidizing.

Next, a configuration of the entry-side sealing apparatus 8 will be described in detail by using Figs. 1 and 2. Note that the delivery-side sealing apparatus 9 has the configuration and functions similar to the entry-side sealing apparatus 8. Therefore, the explanation on the configuration of the delivery-side sealing apparatus 9 will be omitted.

As shown in Figs. 1 and 2, the entry-side sealing apparatus 8 is provided with a pair of gates 22 and a pair of baffle plates 23. The gates 22 are disposed to face each other in a thickness direction so as to sandwich the strip S, and are movably supported by partition plates 21 so as to approach and to recede from each other substantially in an orthogonal direction to the conveyance direction. Meanwhile, the baffle plates 23 are disposed to face each other in a width direction so as to sandwich the strip S, and are movably supported so as to approach and to recede from each other substantially in the orthogonal direction relative to the conveyance direction by unillustrated partitions. Moreover, the baffle plates 23 are allowed to follow ends of the strip S in accordance with end position information and width information of the conveyed strip S. To sum up, the gates 22 move in response to the thickness and the shape of the strip S while the baffle plates 23 move in response to the width or meander of the strip S.

Meanwhile, chamber 24 is formed inside the gate 22 so as to extend in the width direction. The chamber 24 has slits (nozzles) 25a and 25b respectively on tip ends of the gate 22, the slits being formed across the entire region in the width direction, and being open to the strip S.

Moreover, suction port of a fan 32 is connected to the chamber 24 through suction pipe 31, and upstream ends respectively of an exhaust pipe 33 and a return pipe 37 are connected to a delivery port of the fan 32. A regulating valve 34 and a flow meter 35 are provided on the exhaust pipe 33 sequentially from the upstream side, and a downstream end of the exhaust pipe 33 is connected to a flare stack 36. The return pipe 37 is provided with a regulating valve 38 and a downstream end of the return pipe 37 is connected to a supply pipe 39 for supplying the nitrogen gas. The supply pipe 39 is provided with a flow meter 40 and a regulating valve 41 in this order from the upstream side, the flow meter 40 and the regulating valve 41 located more upstream than a part where the supply pipe 39 is connected with the return pipe 37, and a downstream end of the supply pipe 39 is connected to the inside of the heating zone 2 (the conveying path 5).

Note that the gates 22, the chambers 24, the slits 25a and 25b, the suction pipes 31, the fan 32, and the like constitute sucking means, while the exhaust pipe 33, the regulating valves 34, 38, and 41, the flow meters 35 and 40, the flare stack 36, the return pipe 37, the supply pipe 39, and the like constitute circulating means, the regulating valves 34, 38 and 41, and the like constitute flow rate adjusting means, and the fan 32 and the like constitute suction power varying means.

Therefore, by forming the above-described configuration, the atmospheric gas Gh is firstly supplied from the gas supply pipe 10 into the quenching zone 3, and the atmospheric gas Gn is supplied from the gas supply pipes 14 into the heating zone 2 and the final cooling zone 4. Thereafter, the strip S is conveyed into the heating zone 2. The strip S is heated up to a predetermined temperature while being prevented from oxidizing by use of the atmospheric gas Gn. Then the strip S is conveyed to the quenching zone 3 through the conveying path 5. Here, when this strip S is conveyed from the heating zone 2 to the quenching zone 3, the entry-side sealing apparatus 8 prevents the atmospheric gas Gh from leaking out of the quenching zone 3 to the heating zone 2, and the atmospheric gas Gn from entering from the heating zone 2 to the quenching zone 3.

Subsequently, inside the quenching zone 3, the atmospheric gas Gh sucked by the fan 11 is cooled down with the gas cooler 12 and is then supplied to the gas jet chambers 13. Thereafter, the strip S is subjected to the jet of the atmospheric gas Gh supplied from the gas jet chambers 13, whereby the strip S is cooled down to the predetermined temperature and is then conveyed to the final cooling zone 4 through the conveying path 6. Here, when the strip S is conveyed from the quenching zone 3 to the final cooling zone 4, the delivery-side sealing apparatus 9 prevents the atmospheric gas Gh from leaking out of the quenching zone 3 to the final cooling zone 4, and the atmospheric gas Gn from entering from the final cooling zone 4 to the quenching zone 3. Subsequently, inside the final cooling zone 4, the strip S is retained at the above-mentioned temperature for a certain period of time, cooled down substantially to a room temperature, and then exhausted out of the final cooling zone 4.

Next, a sealing action and a gas circulating action of the entry-side sealing apparatus 8 will be described. Note that a sealing action and a gas circulating action of the delivery-side sealing apparatus 9 are similar to those of the entry-side sealing apparatus 8. Accordingly, explanations on the sealing action and the gas circulating action of the delivery-side sealing apparatus 9 will be omitted.

As shown in Fig. 2, the gates 22 and the baffle plates 23 are disposed in predetermined positions respectively so as to approach or to recede from each other in response to the thickness and the width of the strip S. Meanwhile, the drive (pressurization) of the fan 32 makes pressure inside the chamber 24 to be negative, thereby starting suction from the slits 25a and 25b. Here, pressurizing power of the fan 32 is variable. Accordingly, the suction power by the slits 25a and 25b can also be variable by modifying the setting of this pressurizing power.

Thereafter, when the strip S is conveyed to a space surrounded by the gates 22 and the baffle plates 23, the atmospheric gas Gh inside the quenching zone 3 is about to leak out (a flow indicated with a dotted line in the drawing) to the heating zone 2, while the atmospheric gas Gn in the heating zone 2 is about to enter (a flow indicated with a solid line in the drawing) the quenching zone 3 along with the strip S. Here, in this configuration, the slits 25a and 25b are formed at the tip ends of the gates 22 so as to face the strip S and suction flow rates (the suction power) of the slits 25a and 25b are set to be faster than the leakage flow rate and the entry flow rate by way of a pressurizing action of the fan 32. Accordingly, the atmospheric gases Gh and Gn flowed out can be sucked without being suffered from turbulence or dispersion.

Subsequently, the atmospheric gases Gh and Gn sucked through the slits 25a and 25b are caused to flow into the chambers 24, and form a mixed gas g. Then the mixed gas g is sucked by the suction pipes 31. This mixed gas g thus sucked is divided, on the downstream side of the fan 32, into one flowing to the exhaust pipe 33 and one flowing to the return pipe 37. The mixed gas g flowing to the exhaust pipe 33 is exhausted into the flare stack 36, burned inside the flare stack 36 to be harmless, and then exhausted to the atmosphere. On the other hand, the mixed gas g flowing to the return pipe 37 is exhausted to the supply pipe 39, replenished with nitrogen gas so as to be the atmospheric gas Gn, and then supplied into the heating zone 2.

At this time, the suction amount of the mixed gas g to be sucked through the slits 25a and 25b is regulated at a constant level by the fan 32. Meanwhile, openings of the regulating valves 34, 38, and 41 are controlled so as to make the suction amount of the mixed gas g to be sucked through the slits 25a and 25b equal to the supply amount (the return amount) of the atmospheric gas Gn to be supplied from the supply pipe 39 into the heating zone 2. In this way, the pressures inside the heating zone 2 and the quenching zone 3 are maintained at constant levels. Here, the mixed gas g flowing into the supply pipe 39 is subjected to replenishment of the nitrogen gas through the regulating valve 41 so that the components (the density) of the mixed gas is made to be equal to the atmospheric gas Gn inside the heating zone 2.

Here, if the atmospheric gas Gn is likely to leak out of the heating zone 2 due to external turbulence, or if the atmospheric gas Gh is likely to leak out of the quenching zone 3 into the heating zone 2 without being sucked by the slits 25a and 25b, the regulation may be made on the openings of the regulating valves 34, 38, and 41 considering these risks. Specifically, the regulation may be made so that an amount of gas, which is obtained by adding any or both of the leakage amount of the atmospheric gas Gn and the leakage amount of the atmospheric gas Gh to the suction amount of the mixed gas g, becomes equal to the supply amount of the atmospheric gas Gn.

Therefore, according to the sealing apparatus of the present invention, it is possible to control the amount of replenishment (the amount of use) of the nitrogen gas necessary for adjustment by replenishing the nitrogen gas into a part of the mixed gas g (the mixed gas g other than the mixed gas g to be flowed out to the exhaust pipe 33) sucked through the slits 25a and 25b so that the resultant gas has the same components as the atmospheric gas Gn inside the heating zone 2, and thereby to attain cost reduction. Moreover, the gates 22 are allowed to approach or to recede from the strip S, in response to the thickness of the strip S, so that the clearances between each of the surfaces of the strip S and each of the slits 25a and 25b can be narrower. Meanwhile, the baffle plates 23 are allowed to approach or to recede from the strip S, in response to the thickness of the strip S, so that clearances between each of the ends of the strip and each of the tip ends of the baffle plates 23 can be narrower. Accordingly, it is possible to improve the sealing performance.

Additionally, it is possible to maintain constant pressures in the heating zone 2 and in the quenching zone 3 by controlling the openings of the regulating valves 34, 38, and 41 so that the suction amount of the mixed gas g to be sucked by the slits 25a and 25b becomes equal to the supply amount of the atmospheric gas Gn to be supplied from the supply pipe 39 into the heating zone 2. Accordingly, it is possible to achieve the constant suction amount and thereby to perform component adjustment of the mixed gas g easily.

Moreover, it is possible to set the suction flow rates through the slits 25a and 25b faster than the leakage flow rate of the atmospheric gas Gh and the entry flow rate of the atmospheric gas Gn by making the pressurizing power of the fan 32 variable in response to distances between the tip ends of the gates 22 and the strip S. Accordingly, the atmospheric gases Gh and Gn flowed out can be efficiently sucked at a small suction amount without being suffered from turbulence or dispersion. Here, even when the distances between the tip ends of the gates 22 and the strip S can not be narrower, the suction flow rates of suction through the slits 25a and 25b can be set faster than the leakage flow rate of the atmospheric gas Gh and the entry flow rate of the atmospheric gas Gn. Hence it is possible to improve the sealing performance.

Furthermore, with the slits 25a and 25b opened on the tip ends of the gates 22 so as to face the strip S, it is possible to control volumes of the mixture gas of the atmospheric gases Gh and Gn in the vicinity of the slits 25a and 25b to a minimum. Accordingly, it is possible to perform suction efficiently at a small suction amount. In this way, it is possible to downsize the gates 22 and the fan 32 and to achieve smaller diameters of the respective pipes 31, 33, 37, and 39. Hence it is possible to keep the apparatus compact as a whole. Here, it is also possible to make opening areas of the slits 25a and 25b variable. In this way, it is possible to improve a sucking capability by raising the suction flow rates without increasing the suction amount.

Moreover, as described previously, the improved sealing performance between the heating zone 2 and the quenching zone 3 allows quenching in the quenching zone 3 by using the atmospheric gas Gh which is the high-density hydrogen gas. Accordingly, it is possible to perform annealing in a wide range. In this way, it is possible to manufacture strips of high-quality types such as a super-high tensile strength strip.

### Second embodiment

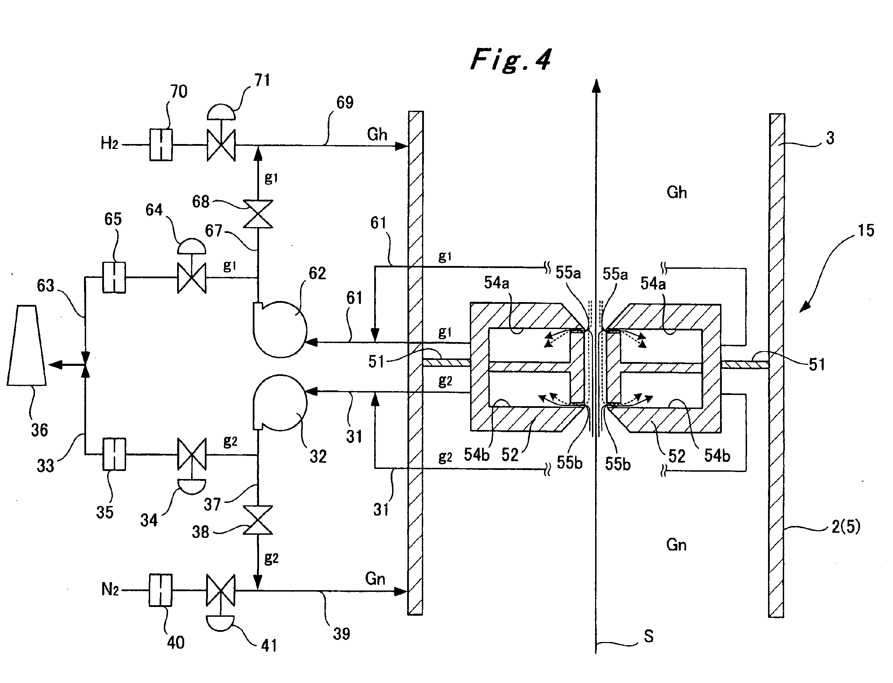

Fig. 4 is a schematic diagram of a sealing apparatus according to a second embodiment of the present invention.

As shown in Fig. 4, an entry-side sealing apparatus 15 is provided with a pair of gates 52 and a pair of baffle plates 23 (see Fig. 2). The gates 52 are disposed so as to sandwich a strip S to face each other in a thickness direction thereof and are movably supported by partition plates 51 so as to approach and to recede from each other substantially in an orthogonal direction relative to a conveyance direction. Meanwhile, chambers 54a and 54b extending in a width direction are formed inside the gates 52, and the chambers 54a and 54b respectively have open slits (nozzles) 55a and 55b formed across the entire region in the width direction inside the gates 52.

Moreover, suction ports of a fan 32 are connected to the chambers 54a through suction pipes 61, and upstream ends of an exhaust pipe 63 and a return pipe 67 are connected to a delivery port of this fan 62. A regulating valve 64 and a flow meter 65 are provided on the exhaust pipe 63 sequentially from the upstream side, and a downstream end of the exhaust pipe 63 is connected to a flare stack 36. The return pipe 67 is provided with a regulating valve 68 and a downstream end of the return pipe 67 is connected to a supply pipe 69 for supplying hydrogen gas. The supply pipe 69 is provided with a flow meter 70 and a regulating valve 71 from the upstream side in this order, the flow meter 70 and the regulating valve 71 located more upstream than a part where the supply pipe 69 is connected with the return pipe 67, and a downstream end of the supply pipe 69 is connected to the inside of a quenching zone 3.

Meanwhile, suction ports of a fan 32 are connected to the chamber 54b through suction pipes 31, and upstream ends of an exhaust pipe 33 and a return pipe 37 are connected to a delivery port of this fan 32. A regulating valve 34 and a flow meter 35 are provided on the exhaust pipe 33 sequentially from the upstream side, and a downstream end of the exhaust pipe 33 is connected to a flare stack 36. The return pipe 37 is provided with a regulating valve 38 and a downstream end of the return pipe 37 is connected to a supply pipe 39 for supplying nitrogen gas. The supply pipe 39 is provided with a flow meter 40 and a regulating valve 41 from the upstream side in this order, the flow meter 40 and the regulating valve 41 located more upstream than a part where the supply pipe 39 is connected with the return pipe 37, and a downstream end of the supply pipe 39 is connected to the inside of the heating zone 2 (a conveying path 5).

Note that the gates 52, the chambers 54a and 54b, the slits 55a and 55b, the suction pipes 31 and 61, the fans 32 and 62, and the like constitute sucking means while the exhaust pipes 33 and 63, the regulating valves 34, 38, 41, 64, 68, and 71, the flow meters 35, 40, 65, and 70, the flare stack 36, the return pipes 37 and 67, the supply pipes 39 and 69, and the like constitute circulating means, the regulating valves 34, 38, 41, 64, 68, 71, and the like constitute flow rate adjusting means, and the fans 32, 62, and the like constitute suction power varying means.

Therefore, by forming the above-described configuration, the gates 52 and the baffle plates 23 are disposed in predetermined positions so as to approach or to recede from each other in response to the thickness and the width of the strip S. Meanwhile, the pressure inside the chambers 54a and 54b is set to negative by drive (pressurization) of the fans 32 and 62, thereby starting suction from the slits 55a and 55b. Here, pressurizing power of the fans 32 and 62 is set to be variable. This variable setting of the pressurizing power allows the suction power by the slits 55a and 55b to be variable.

Thereafter, when the strip S is conveyed to a space surrounded by the gates 52 and the baffle plates 23, the atmospheric gas Gh inside the quenching zone 3 is about to leak out (the flow indicated with a dotted line in the drawing) to the heating zone 2 while the atmospheric gas Gn in the heating zone 2 is about to enter (the flow indicated with a solid line in the drawing) the quenching zone 3 along with the strip S. Here, in this configuration, the slits 55a and 55b are formed so as to face the strip S at the tip ends of the gates 22 and suction flow rates (the suction power) of the slits 55a and 55b are set faster than the leakage flow rate and the entry flow rate by way of pressurizing actions of the fans 32 and 62. Accordingly, the atmospheric gases Gh and Gn flowed out can be sucked without being suffered from turbulence or dispersion.

Subsequently, the atmospheric gases Gh and Gn sucked through the slits 55a flow into the chambers 54a, are formed into a mixed gas g₁, and then sucked by the suction pipes 61. The mixed gas g₁ thus sucked is divided on the downstream side of the fan 62 into the one flowing to the exhaust pipe 63 and the one flowing to the return pipe 67. The mixed gas g₁ flowing to the exhaust pipe 63 is exhausted into the flare stack 36, burned inside the flare stack 36 to be harmless, and then exhausted to the atmosphere. On the other hand, the mixed gas g₁ flowing to the return pipe 67 is exhausted to the supply pipe 69, replenished with hydrogen gas to be the atmospheric gas Gh, and then supplied into the quenching zone 3.

At this time, the suction amount of the mixed gas g₁ to be sucked through the slits 55a is regulated at a constant level by the fan 62. Meanwhile, openings of the regulating valves 64, 68, and 71 are controlled so that the suction amount of the mixed gas g₁ to be sucked through the slits 55a is made to be equal to the supply amount (the return amount) of the atmospheric gas Gh to be supplied from the supply pipe 69 into the quenching zone 3. In this way, the pressure inside the quenching zone 3 is maintained at a constant level. Here, the mixed gas g₁ flowing into the supply pipe 69 is subjected to replenishment of the hydrogen gas by the regulating valve 71, and is adjusted so that the resultant gas has the same components (the density) as the atmospheric gas Gh inside the quenching zone 3.

Here, if there is a risk of leakage of the atmospheric gas Gh out of the quenching zone 3 due to external turbulence, or entry of the atmospheric gas Gn from the heating zone 2 into the quenching zone 3 without being sucked through the slits 55a and 55b, the openings of the regulating valves 64, 68, and 71 may be controlled considering these factors, so that an amount of gas, which is obtained by adding any or both of the amount of leakage of the atmospheric gas Gh and the amount of entry of the atmospheric gas Gn to the suction amount of the mixed gas g₁ is made to be equal to the supply amount of the atmospheric gas Gh.

Meanwhile, the atmospheric gases Gh and Gn sucked through the slits 55b flow into the chambers 54b, are formed into a mixed gas g₂ and then sucked by the suction pipes 31. This sucked mixed gas g₂ is divided on the downstream side of the fan 32 into the one flowing to the exhaust pipe 33 and the one flowing to the return pipe 37. The mixed gas g₂ flowing to the exhaust pipe 33 is exhausted into the flare stack 36, burned inside the flare stack 36 to be harmless, and then exhausted to the atmosphere. On the other hand, the mixed gas g₂ flowing to the return pipe 37 is exhausted to the supply pipe 39, replenished with nitrogen gas to be the atmospheric gas Gn, and then supplied into the heating zone 2.

At this time, the suction amount of the mixed gas g₂ to be sucked through the slits 55b is regulated at a constant level by the fan 32. Meanwhile, openings of the regulating valves 34, 38, and 41 are controlled so that the suction amount of the mixed gas g₂ to be sucked through the slits 55b is made to be equal to the supply amount (the return amount) of the atmospheric gas Gn to be supplied from the supply pipe 39 into the heating zone 2. In this way, the pressure inside the heating zone 2 is maintained at a constant level. Here, the mixed gas g₂ flowing into the supply pipe 39 is subjected to replenishment of the nitrogen gas by the regulating valve 41, and then is adjusted so that the resultant gas has the same components (the density) as the atmospheric gas Gn inside the heating zone 2.

Here, if there is a risk of leakage of the atmospheric gas Gn out of the heating zone 2 due to external turbulence or entry of the atmospheric gas Gh from the quenching zone 3 into the heating zone 2 without being sucked through the slits 55a and 55b, it is possible to control the openings of the regulating valves 34, 38, and 41 considering these factors so that an amount of gas, which is obtained by adding any or both of the amount of leakage of the atmospheric gas Gn and the amount of entry of the atmospheric gas Gh to the suction amount of the mixed gas g₂ is made to be equal to the supply amount of the atmospheric gas Gn.

Therefore, according to the sealing apparatus of the present invention, the hydrogen gas is replenished into a part of the mixed gas g₁ (the mixed gas g₁ other than the mixed gas g₁ to be flowed out to the exhaust pipe 63) sucked through the slits 55a so that the resultant gas has the same components as the atmospheric gas Gh inside the quenching zone 3. Meanwhile, the nitrogen gas is replenished into a part of the mixed gas g₂ (the mixed gas g₂ other than the mixed gas g₂ to be flowed out to the exhaust pipe 33) sucked through the slits 55b so that the resultant gas has the same components as the atmospheric gas Gn inside the heating zone 2.. Therefore the amounts of replenishment (the amounts of use) of the hydrogen gas and the nitrogen gas necessary for adjustment can be controlled. Accordingly, cost reduction can be achieved. Moreover, since the mixed gases g1 and g2 flow different circulation paths, it is possible to set up the suction power independently in the respective paths and thereby to select sealing conditions more efficiently. As a result, it is possible to reduce the mixture of the atmospheric gases Gh and Gn and thereby to reduce the amounts of replenishment of the hydrogen gas and the nitrogen gas.

Meanwhile, it is possible to maintain constant pressures in the heating zone 2 and in the quenching zone 3 by controlling the openings of the regulating valves 64, 68, and 71 and of the regulating valves 34, 38, and 41 so that the amounts of suction of the mixed gases g₁ and g₂ to be sucked through the slits 55a and 55b are made to be equal to the sum of the supply amount of the atmospheric gas Gh to be supplied from the supply pipe 69 into the quenching zone 3 and the supply amount of the atmospheric gas Gn to be supplied from the supply pipe 39 into the heating zone 2. Accordingly, it is possible to achieve the constant amounts of suction respectively and thereby to perform component adjustment of the mixed gases g₁ and g₂ easily.

Moreover, it is possible to set the suction flow rates through the slits 55a and 55b faster than the leakage flow rate of the atmospheric gas Gh and the entry flow rate of the atmospheric gas Gn by making the pressurizing power of the fans 32 and 62 variable. Accordingly, the atmospheric gases Gh and Gn that flowed out can be sucked at small amounts of suction efficiently without being suffered from turbulence or dispersion.

Furthermore, with the open slits 55a and 55b on the tip ends of the gates 52 so as to face the strip S, it is possible to control volumes of the mixed gas of the atmospheric gases Gh and Gn in the vicinity of the slits 55a and 55b to a minimum. Accordingly, it is possible to perform suction efficiently at a small suction amount. In this way, it is possible to downsize the gates 52 and the fans 32 and 62, and to achieve smaller diameters of the respective pipes 31, 33, 37, 39, 61, 63, 67, and 69. Hence the apparatus can be formed compact as a whole. Here, the opening areas of the slits 55a and 55b may be made variable. In this way, it is also possible to improve a sucking capability by raising the suction flow rates without increasing the suction amount.

### Third embodiment

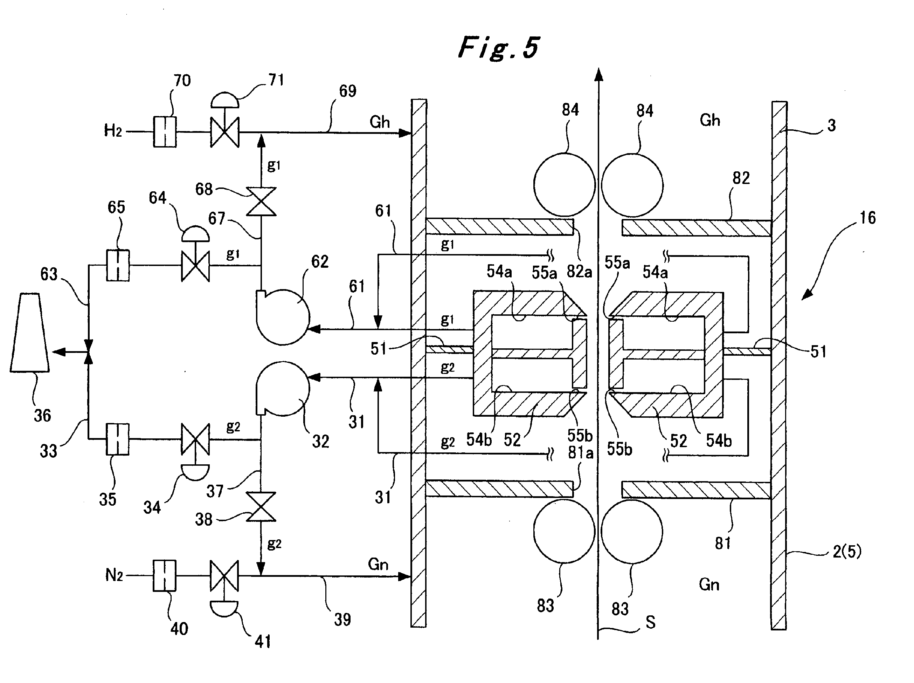

Fig. 5 is a schematic diagram of a sealing apparatus according to a third embodiment of the present invention.

As shown in Fig. 5, an entry-side sealing apparatus 16 is provided with sealing plates 81 and 82 which are disposed respectively on an upstream side and a downstream side of gates 52. A pair of sealing rolls 83 is rotatably supported on an entry side (the upstream side) of an opening 81a of the sealing plate 81. Meanwhile, a pair of sealing rolls 84 is rotatably supported on a delivery side (the downstream side) of an opening 82a of the sealing plate 82. The sealing rolls 83 and 84 are disposed to face each other in a thickness direction so as to sandwich a strip S and are also movably supported substantially in an orthogonal direction relative to conveyance direction so as to approach and to recede from each other. In other words, the sealing rolls 83 and 84 are moved in response to the thickness of the strip S.

Therefore, the provision of the sealing rolls 83 and 84 makes it possible to prevent the strip S and the gates 52 from being contact with each other due to the vibration or warpage of the strip S. Moreover, atmospheric gases Gh and Gn to flow into clearances between the strip S and slits 55a and 55b can be reduced. Accordingly, it is possible to further reduce the amounts of the hydrogen gas and the nitrogen gas used for replenishment.

### Fourth embodiment

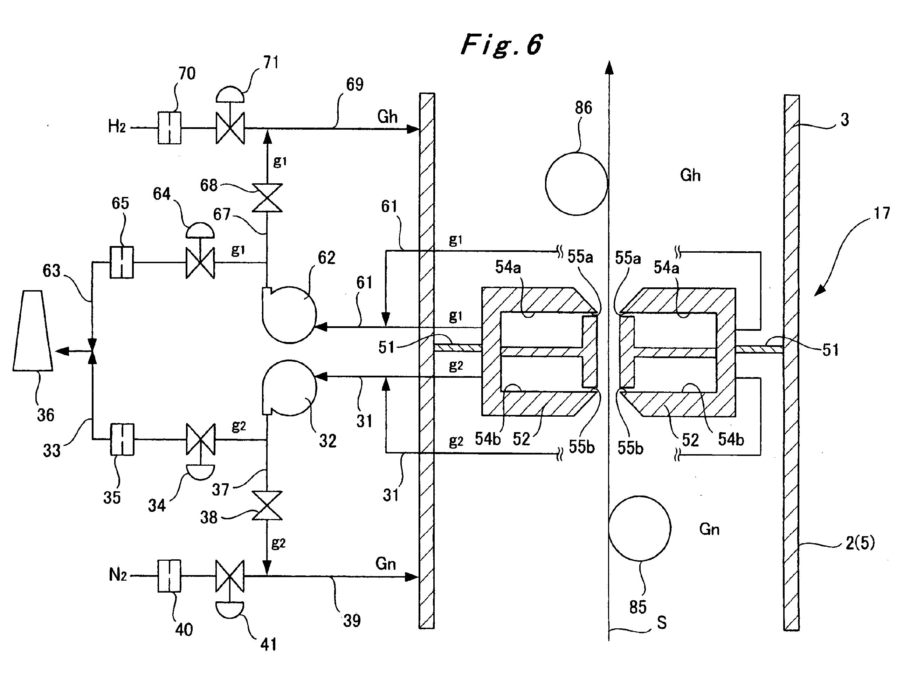

Fig. 6 is a schematic diagram of a sealing apparatus according to a fourth embodiment of the present invention.

As shown in Fig. 6, an entry-side sealing apparatus 17 includes rotatably supported guide rolls 85 and 86 to be disposed respectively on an upstream side and a downstream side of gates 52. These guide rolls 85 an 86 are disposed so as to sandwich a strip S.

Therefore, the provision of the guide rolls 85 and 86 makes it possible to prevent the strip S and the gates 52 from being contact with each other due to the vibration or warpage of the strip S. Moreover, atmospheric gases Gh and Gn to flow into clearances between the strip S and slits 55a and 55b can be reduced. Accordingly, it is possible to further reduce the amounts of the hydrogen gas and the nitrogen gas used for replenishment.

### Fifth embodiment

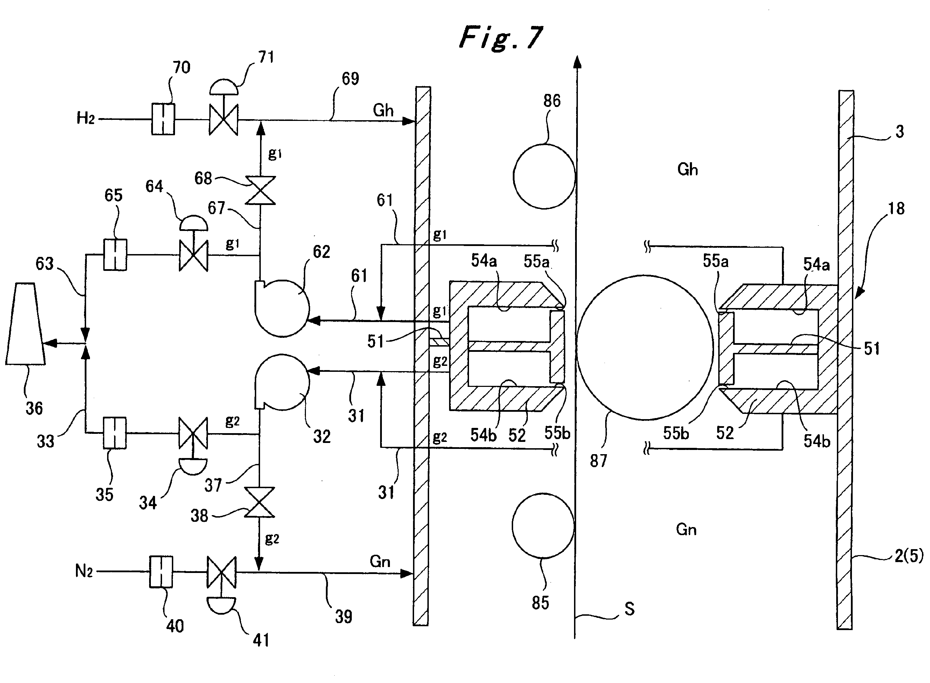

Fig. 7 is a schematic diagram of a sealing apparatus according to a fifth embodiment of the present invention.

As shown in Fig. 7, an entry-side sealing apparatus 18 includes a rotatably supported guide roll 87 to be disposed between gates 52. This guide roll 87 is provided on an opposite side of a strip S relative to guide rolls 85 and 86.

Therefore, the provision of the guide rolls 85, 86, and 87 makes it possible to prevent the strip S from being vibrated or warping so that the gates 52 can approach the strip S much closer. Hence the reliable sucking is achieved.

### Sixth embodiment

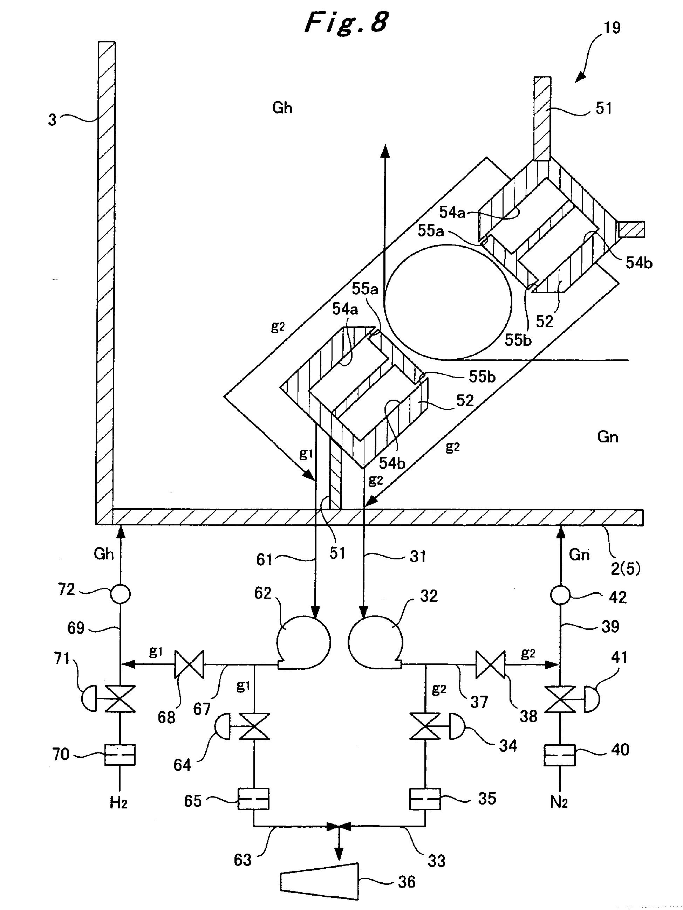

Fig. 8 is a schematic diagram of a sealing apparatus according to a sixth embodiment of the present invention.

As shown in Fig. 8, an entry-side sealing apparatus 19 is disposed on a corner in between a heating zone 2 (a conveying path 5) and a quenching zone 3, and gates 52 are disposed so as to sandwich a deflector roll 7 supported on this corner. Meanwhile, a supply pipe 39 is provided with a N₂ density sensor 42 located more downstream than a portion where the supply pipe 39 is connected with a return pipe 37. This N₂ density sensor 42 is used to detect nitrogen gas density included in an atmospheric gas Gn obtained by replenishing nitrogen gas into a mixed gas g₂. On the other hand, a supply pipe 69 is provided with a H₂ density sensor 72 located more downstream than a portion where the supply pipe 39 is connected with a return pipe 67. This H₂ density sensor 72 is used to detect hydrogen gas density included in an atmospheric gas Gh obtained by replenishing hydrogen gas into a mixed gas g₁.

Therefore, with the above-described configuration, the mixed gas g₁ flowing into the supply pipe 69 is subjected to replenishment of the hydrogen gas with a regulating valve 71, and is adjusted so that the resultant gas has the same components as the atmospheric gas Gh inside the quenching zone 3. Thus the resultant gas becomes the atmospheric gas Gh. The H₂ density sensor 72 detects the hydrogen gas density included in the atmospheric gas Gh before the atmospheric gas Gh is exhausted into the quenching zone 3. Then, the opening of the regulating valve 71 is controlled on the basis of the hydrogen gas density of the atmospheric gas Gh, the density detected by this H₂ density sensor 72. In other words, the regulating valve 71 is controlled so that the detected hydrogen gas density is to be equal to a predetermined density (components).

Meanwhile, the mixed gas g₂ flowing into the supply pipe 39 is subjected to replenishment of the nitrogen gas with a regulating valve 41, and is adjusted so that the resultant gas has the same components as the atmospheric gas Gn inside the heating zone 3. Thus the resultant gas becomes the atmospheric gas Gn. The N₂ density sensor 42 detects the nitrogen gas density included in the atmospheric gas Gn before the atmospheric gas Gn is exhausted into the heating zone 2. Then, the opening of the regulating valve 41 is controlled on the basis of the nitrogen gas density of the atmospheric gas Gn, the density detected by the N₂ density sensor 42. In other words, the regulating valve 41 is controlled so that the detected hydrogen gas density becomes equal to a predetermined density (components).

Therefore, the provision of the density sensors 72 and 42 makes it possible to perform component adjustment of the mixed gases g₁ and g₂ to be subsequently supplied on the basis of the densities of the mixed gases g₁ and g₂ (the atmospheric gases Gh and Gn) after the component adjustment, the densities detected by the density sensors 72 and 42. Accordingly, the gas densities at the time of supply can be set surely equal to the predetermined densities. Here, layout positions of the density sensors 72 and 42 may be in positions where the densities of the mixed gases g₁ and g₂ before the component adjustment can be measured. Moreover, the density sensors 72 and 42 are also applicable to the configurations from the first embodiment to the fifth embodiment. With these sensors, it is possible to improve accuracy of the component adjustments. In addition, it is also possible to prevent the strip S and the gates 52 from being in contact with each other due to vibration or warpage of the strip S even if the gates 52 are provided so as to sandwich the deflector roll 7.

Note that the sealing apparatuses 8 and 9 are provided on the entry side and the delivery side of the quenching zone 3 in each of the embodiments described above. However, it is also possible to provide similar sealing apparatus on an entry side and a delivery side of the heating zone 2, on an entry side and a delivery side of the final cooling zone 4, and at the entrance port 1a and the discharge port 1b of the continuous annealing furnace 1. Moreover, although the sealing apparatus for sealing between two types of atmospheric gases has been described in each of the embodiments, it is not limited only to gases, but liquids are also applicable. Alternatively, it is also applicable to a sealing apparatus for sealing between the same fluids having different temperatures. In this case, temperature adjusting means may be used instead of adjusting the components similarly to the invention of this application. Moreover, in each of the embodiments, it is possible to use component separating means and the like instead of adjusting the components.

### Industrial Applicability

The invention is applicable to a heat treatment apparatus for performing a heat treatment using a hazardous atmospheric gas.

## Claims

1. A sealing apparatus (8, 9; 15-19) provided on an entrance portion and on an exit portion of a strip (S) in a heat treatment chamber (3) for continuously performing a heat treatment on the strip (S) in an atmospheric fluid, comprising:
sucking means (22, 24, 25a, 25b, 31, 32; 52, 54a, 54b, 55a, 55b, 61, 62) for sucking a first fluid (Gh) that is about to leak out of the heat treatment chamber (3) to adjacent zones (2, 4) and a second fluid (Gn) that is about to enter from the adjacent zones (2, 4) to the heat treatment chamber (3), and then mixing the first fluid (Gh) and the second fluid (Gn) to form a mixed fluid (g; g_{1,} g₂);
the sucking means (22, 24, 25a, 25b, 31, 32; 52, 54a, 54b, 55a, 55b, 61, 62) including a first suction pipe (31) for sucking a portion of the mixed fluid (g; g₂) and dividing the portion of the mixed fluid (g; g₂) into a first part flowing to an exhaust pipe (33) and a second part flowing to a return pipe (37), and **characterised by**
circulating means (33-41; 63-71) for adjusting components of the second part of the portion of the mixed fluid (g; g₂) so that said second part of the portion of the mixed fluid (g; g₂) is replenished with nitrogen gas so as to have the same components as those of the second fluid (Gn) and returning the resultant fluid to the adjacent zones (2, 4) via a first supply pipe (39).

2. The sealing apparatus (15-19) according to claim 1, wherein
the sucking means (22, 24, 25a, 25b, 31, 32; 52, 54a, 54b, 55a, 55b, 61, 62) further includes a second suction pipe (61) for sucking another portion of the mixed fluid (g₁) and dividing said other portion of the mixed fluid (g₁) into a first part flowing to an exhaust pipe (63) and a second part flowing to a return pipe (69), and
second circulating means (63-71) is adapted to adjust components of the second part of said other portion of the mixed fluid (g₁) so that said second part of said other portion of the mixed fluid (g₁) is replenished with hydrogen gas to have the same components as those of the first fluid (Gh) and returning the resultant fluid into the heat treatment chamber (3) via a second supply pipe (69).

3. The sealing apparatus (8, 9; 15-19) according to claim 1 or 2, wherein a plurality of stages of the sucking means (22, 24, 25a, 25b, 31, 32; 52, 54a, 54b, 55a, 55b, 61, 62) are provided in a direction of conveyance of the strip (S), and
each of the plurality of stages of the sucking means (22, 24, 25a, 25b, 31, 32; 52, 54a, 54b, 55a, 55b, 61, 62) is provided with the circulating means (33-41; 63-71).

4. The sealing apparatus (8, 9; 15-19) according to any of claims 1 to 3, wherein the circulating means (33-41; 63-71) comprises flow rate adjusting means (34, 38, 41; 64, 68, 71) for performing adjustment so that an amount sucked by the sucking means (22, 24, 25a, 25b, 31, 32; 52, 54a, 54b, 55a, 55b, 61, 62) becomes equal to an amount returned by the circulating means (33-41; 63-71).

5. The sealing apparatus (8, 9; 15-19) according to any of claims 1 to 4, wherein the sucking means (22, 24, 25a, 25b, 31, 32; 52, 54a, 54b, 55a, 55b, 61, 62) comprises suction power varying means (32; 62) for making the suction power of the sucking means (22, 24, 25a, 25b, 31, 32; 52, 54a, 54b, 55a, 55b, 61, 62) variable.

6. The sealing apparatus (8, 9; 15-19) according to any of claims 1 to 5, wherein
the sucking means (22, 24, 25a, 25b, 31, 32; 52, 54a, 54b, 55a, 55b, 61, 62) is supported so as to be movable in response to a strip thickness and a strip shape, and
a nozzle (25a, 25b; 55a, 55b) is formed on a tip end of the sucking means (22, 24, 25a, 25b, 31, 32; 52, 54a, 54b, 55a, 55b, 61, 62) so as to face the strip (S).

7. A continuous annealing furnace (1) for continuously annealing a conveyed strip (S), comprising the sealing apparatus (15-19) according to claim 2, wherein
the heat treatment chamber (3) is a cooling zone (3) for cooling the heated strip (S) down to a predetermined temperature;
the sucking means (31, 32, 52, 54a, 54b, 55a, 55b, 61, 62) is provided at an entrance portion and at an exit portion of the cooling zone (3);
the first fluid (Gh) is a high-density hydrogen gas (Gh);
the second fluid (Gh) is a high-density nitrogen gas (Gn); and
the component adjusted by the circulating means (33-41, 63-71) is the density of the mixed gas (g₁, g₂).

## Patentansprüche

1. Dichtungsvorrichtung (8, 9; 15-19), die an einem Eingangsbereich und einem Ausgangsbereich eines Bandstreifens (S) in einer Wärmebehandlungskammer (3) zum kontinuierlichen Durchführen einer Wärmebehandlung an dem Bandstreifen (S) in einem atmosphärischen Fluid angebracht ist, mit
einer Ansaugeinrichtung (22, 24, 25a, 25b, 31, 32; 52, 54a, 54b, 55a, 55b, 61, 62) zum Ansaugen eines ersten Fluids (Gh), das im Begriff steht, aus der Wärmebehandlungskammer (3) in angrenzende Zonen (2, 4) zu entweichen, und eines zweiten Fluids (Gn), das im Begriff steht, aus den angrenzenden Zonen (2, 4) in die Wärmebehandlungskammer (3) einzudringen, und zum anschließenden Mischen des ersten Fluids (Gh) und des zweiten Fluids (Gn), um ein Mischfluid (g; g_{1,} g₂) zu bilden,
wobei die Ansaugeinrichtung (22, 24, 25a, 25b, 31, 32; 52, 54a, 54b, 55a, 55b, 61, 62) ein erstes Ansaugrohr (31) aufweist, um einen Anteil des Mischfluids (g; g₂) anzusaugen und den Mischfluidanteil (g; g₂) in einen ersten Teil, der zu einem Auslassrohr (33) strömt, und einen zweiten Teil, der zu einem Rückführrohr (37) strömt, zu trennen, und
**gekennzeichnet durch** eine Zirkulationseinrichtung (33-41; 63-71) zum Anpassen von Komponenten des zweiten Teils des Mischfluidanteils (g; g₂), so dass der zweite Teil des Mischfluidanteils (g; g₂) mit Stickstoffgas aufgefüllt wird, um die gleichen Komponenten wie das zweite Fluid (Gn) zu haben, und zum Rückführen des resultierenden Fluids über ein erstes Zuführrohr (39) in die benachbarten Zonen (2, 4).

2. Dichtungsvorrichtung (15-19) nach Anspruch 1, wobei
die Ansaugeinrichtung (22, 24, 25a, 25b, 31, 32; 52, 54a, 54b, 55a, 55b, 61, 62) ferner ein zweites Ansaugrohr (61) aufweist, um einen anderen Anteil des Mischfluids (g₁) anzusaugen und diesen anderen Mischfluidanteil (g₁) in einen ersten Teil, der zu einem Auslassrohr (63) strömt, und einen zweiten Teil, der zu einem Rückführrohr (69) strömt, zu trennen, und
eine zweite Zirkulationseinrichtung (63-71) dazu ausgelegt ist, Komponenten des zweiten Teils des anderen Mischfluidanteils (g₁) so anzupassen, dass der zweite Teil des anderen Mischfluidanteils (g₁) mit Wasserstoffgas aufgefüllt wird, um die gleichen Komponenten wie das erste Fluid (Gh) zu haben, und das resultierende Fluid über ein zweites Zuführrohr (69) in die Wärmebehandlungskammer (3) zurückzuführen.

3. Dichtungsvorrichtung (8, 9; 15-19) nach Anspruch 1 oder 2, wobei
mehrere Stufen der Ansaugeinrichtung (22, 24, 25a, 25b, 31, 32; 52, 54a, 54b, 55a, 55b, 61, 62) in einer Förderrichtung des Bandstreifens (S) vorgesehen sind, und
jede der mehreren Stufen der Ansaugeinrichtung (22, 24, 25a, 25b, 31, 32; 52, 54a, 54b, 55a, 55b, 61, 62) mit der Zirkulationseinrichtung (33-41; 63-71) versehen ist.

4. Dichtungsvorrichtung (8, 9; 15-19) nach einem der Ansprüche 1 bis 3, wobei die Zirkulationseinrichtung (33-41; 63-71) eine Strömungsratenanpasseinrichtung (34, 38, 41; 64, 68, 71) zum Durchführen einer Anpassung aufweist, so dass ein durch die Ansaugeinrichtung (22, 24, 25a, 25b, 31, 32; 52, 54a, 54b, 55a, 55b, 61, 62) angesaugter Betrag gleich groß wird wie ein durch die Zirkulationseinrichtung (33-41; 63-71) zurückgeführter Betrag.

5. Dichtungsvorrichtung (8, 9; 15-19) nach einem der Ansprüche 1 bis 4, wobei die Ansaugeinrichtung (22, 24, 25a, 25b, 31, 32; 52, 54a, 54b, 55a, 55b, 61, 62) eine Ansaugleistungs-Variationseinrichtung (32; 62) aufweist, um die Ansaugleistung der Ansaugeinrichtung (22, 24, 25a, 25b, 31, 32; 52, 54a, 54b, 55a, 55b, 61, 62) variabel zu machen.

6. Dichtungsvorrichtung (8, 9; 15-19) nach einem der Ansprüche 1 bis 5, wobei
die Ansaugeinrichtung (22, 24, 25a, 25b, 31, 32; 52, 54a, 54b, 55a, 55b, 61, 62) so gelagert ist, dass sie in Reaktion auf eine Streifendicke und eine Streifenform bewegbar ist, und
eine Düse (25a, 25b; 55a, 55b) an einem Spitzenende der Ansaugeinrichtung (22, 24, 25a, 25b, 31, 32; 52, 54a, 54b, 55a, 55b, 61, 62) so gebildet ist, dass sie dem Bandstreifen (S) gegenüberliegt.

7. Kontinuierlicher Glühofen (1) zum kontinuierlichen Ausglühen eines beförderten Bandstreifens (S), mit der Dichtungsvorrichtung (15-19) nach Anspruch 2, wobei
die Wärmebehandlungskammer (3) eine Kühlzone (3) zum Abkühlen des erwärmten Bandstreifens (S) auf eine vorbestimmte Temparatur ist,
die Ansaugeinrichtung (31, 32, 52, 54a, 54b, 55a, 55b, 61, 62) an einem Eingangsbereich und an einem Ausgangsbereich der Kühlzone (3) vorgesehen ist,
das erste Fluid (Gh) ein hochverdichtetes Wasserstoffgas (Gh) ist,
das zweite Fluid (Gn) ein hochverdichtetes Stickstoffgas (Gn) ist, und
die durch die Zirkulationseinrichtung (33-41, 63-71) angepasste Komponente die Dichte des Mischgases (g₁, g₂) ist.

## Revendications

1. Appareil de scellement (8, 9 ; 15-19) prévu sur une partie d'entrée et sur une partie de sortie d'une bande (S) dans une chambre de traitement thermique (3) pour réaliser en continu un traitement thermique sur la bande (S) dans un fluide atmosphérique, comprenant :
des moyens d'aspiration (22, 24, 25a, 25b, 31, 32 ; 52, 54a, 54b, 55a, 55b, 61, 62) pour aspirer un premier fluide (Gh) qui est sur le point de fuir de la chambre de traitement thermique (3) vers des zones (2, 4) adjacentes et un second fluide (Gn) qui est sur le point d'entrer par les zones (2, 4) adjacentes dans la chambre de traitement thermique (3), et mélanger ensuite le premier fluide (Gh) et le second fluide (Gn) afin de former un fluide mélangé (g ; g₁, g₂) ;
les moyens d'aspiration (22, 24, 25a, 25b, 31, 32 ; 52, 54a, 54b, 55a, 55b, 61, 62) comprenant un premier tuyau d'aspiration (31) pour aspirer une partie du fluide mélangé (g ; g₂) et diviser la partie du fluide mélangé (g ; g₂) en une première partie s'écoulant vers un tuyau d'échappement (33) et en une seconde partie s'écoulant vers un tuyau de retour (37), et
**caractérisé en ce que** :
des moyens de circulation (33-41 ; 63-71) pour ajuster des composants de la seconde partie de la partie du fluide mélangé (g ; g₂) de sorte que ladite seconde partie de la partie du fluide mélangé (g ; g₂) est réapprovisionnée en gaz azote afin d'avoir les mêmes composants que ceux du second fluide (Gn) et ramener le fluide résultant vers les zones (2, 4). adjacentes via un premier tuyau d'alimentation (39).

2. Appareil de scellement (15-19) selon la revendication 1, dans lequel :
les moyens d'aspiration (22, 24, 25a, 31, 32 ; 52, 54a, 54b, 55a, 55b, 61, 62) comprennent outre un second tuyau d'aspiration (61) pour aspirer une autre partie du fluide mélangé (g₁) et diviser ladite autre partie du fluide mélangé (g₁) en une première partie s'écoulant vers un tuyau d'échappement (63) et en une seconde partie s'écoulant vers un tuyau de retour (69), et
les seconds moyens de circulation (63-71) sont adaptés pour ajuster des composants de la seconde partie de ladite autre partie du fluide mélangé (g₁) de sorte que ladite seconde partie de ladite autre partie du fluide mélangé (g₁) est réapprovisionnée avec du gaz hydrogène pour avoir les mêmes composants que ceux du premier fluide (Gh) et ramener le fluide résultant dans la chambre de traitement thermique (3) via un second tuyau d'alimentation (69).

3. Appareil de scellement (8, 9 ; 15-19) selon la revendication 1 ou 2, dans lequel :
une pluralité d'étages des moyens d'aspiration (22, 24, 25a, 25b, 31, 32 ; 52, 54a, 54b, 55a, 55b, 61, 62) sont prévus dans une direction de transport de la bande (S), et
chacun de la pluralité d'étages des moyens d'aspiration (22, 24, 25a, 25b, 31, 32 ; 52, 54a, 54b, 55a, 55b, 61, 62) est prévu avec les moyens de circulation (33-41 ; 63-71).

4. Appareil de scellement (8, 9 ; 15-19) selon l'une quelconque des revendications 1 à 3, dans lequel les moyens de circulation (33-41 ; 63-71) comprennent des moyens d'ajustement de débit (34, 38, 41 ; 64, 68, 71) pour réaliser l'ajustement de sorte qu'une quantité aspirée par les moyens d'aspiration (22, 24, 25a, 25b, 31, 32 ; 52, 54a, 54b, 55a, 55b, 61, 62) devient égale à une quantité renvoyée par les moyens de circulation (33-41 ; 63-71).

5. Appareil de scellement (8, 9 ; 15-19) selon l'une quelconque des revendications 1 à 4, dans lequel les moyens d'aspiration (22, 24, 25a, 25b, 31, 32 ; 52, 54a, 54b, 55a, 55b, 61, 62) comprennent des moyens de variation de puissance d'aspiration (32 ; 62) pour rendre la puissance d'aspiration des moyens d'aspiration (22, 24, 25a, 25b, 31, 32 ; 52, 54a, 54b, 55a, 55b, 61, 62) variable.

6. Appareil de scellement (8, 9 ; 15-19) selon l'une quelconque des revendications 1 à 5, dans lequel :
les moyens d'aspiration (22, 24, 25a, 25b, 31, 32 ; 52, 54a, 54b, 55a, 55b, 61, 62) sont supportés afin d'être mobiles en réponse à une épaisseur de bande et à une forme de bande, et
une buse (25a, 25b ; 55a, 55b) est formée sur une extrémité de pointe des moyens d'aspiration (22, 24, 25a, 25b, 31, 32 ; 52, 54a, 54b, 55a, 55b, 61, 62) afin de faire face à la bande (S).

7. Four de recuit continu (1) pour recuire en continu une bande (S) transportée, comprenant l'appareil de scellement (15-19) selon la revendication 2, dans lequel :
la chambre de traitement thermique (3) est une zone de refroidissement (3) pour refroidir la bande (S) chauffée jusqu'à une température prédéterminée ;
les moyens d'aspiration (31, 32, 52, 54a, 54b, 55a, 55b, 61, 62) sont prévus au niveau d'une partie d'entrée et au niveau d'une partie de sortie de la zone de refroidissement (3) ;
le premier fluide (Gh) est un gaz hydrogène à haute densité (Gh) ;
le second fluide (Gn) est un gaz azote à haute densité (Gn) ; et
le composant ajusté par les moyens de circulation (33-41 ; 63-71) est la densité du gaz mélangé (g₁, g₂).
